# EUROPÄISCHE PATENTSCHRIFT

(11) **EP 3 613 578 B1**
(45) Veröffentlichungstag und Bekanntmachung des Hinweises auf die Patenterteilung: **07.04.2021**
(21) Anmeldenummer: 18190072.1
(22) Anmeldetag: 21.08.2018
(51) Int. Cl.: B32B 1/08, B32B 27/08, B32B 27/32, F16L 9/12, B60K 11/02, B32B 27/18, B32B 7/12

(54) **MEHRSCHICHTIGE KRAFTFAHRZEUG-TEMPERIER-ROHRLEITUNG**
MULTILAYER MOTOR VEHICLE TEMPERATURE CONTROL PIPE
CONDUITE MULTICOUCHE DE MISE EN TEMPÉRATURE D'UN VÉHICULE AUTOMOBILE

(43) Veröffentlichungstag der Anmeldung: 26.02.2020
(73) Patentinhaber: TI Automotive (Fuldabrück) GmbH, 34277 Fuldabrück (DE)
(72) Erfinder: Häckel, Andre, 34513 Waldeck (DE)
(74) Vertreter: Andrejewski - Honke Patent- und Rechtsanwälte Partnerschaft mbB

(56) Entgegenhaltungen:
- US-A1- 2005 019 517
- US-A1- 2008 187 701

## Beschreibung

Die Erfindung betrifft eine mehrschichtige Kraftfahrzeug-Rohrleitung, insbesondere eine Kraftfahrzeug-Temperier-Rohrleitung für fluide Temperier- und Kühlmedien. Die erfindungsgemäße Rohrleitung wird somit bevorzugt als Temperier-Rohrleitung, insbesondere als Kühl-Rohrleitung in Kraftfahrzeugen eingesetzt, wobei ein Temperiermedium durch die Rohrleitung geführt wird. - Solche Temperier-Rohrleitungen werden insbesondere in Temperier-Kreisläufen von Kraftfahrzeugen eingesetzt. Dabei wird ein Temperiermittel - insbesondere ein flüssiges Temperiermittel - durch die Temperier-Rohrleitung geführt. Besonders bevorzugt ist die Temperier-Rohrleitung als Kühl-Rohrleitung ausgebildet und dabei wird ein Kühlmittel eines Kühlmittel-Kreislaufes des Kraftfahrzeuges durch die Kühl-Rohrleitungen geleitet. Ein Anwendungsgebiet der erfindungsgemäßen Temperier-Rohrleitungen ist die Verwendung in Temperiersystemen von Elektrofahrzeugen oder von Hybrid-Kraftfahrzeugen mit Elektromotor und Verbrennungsmotor. Weiterhin wird die erfindungsgmäße Temperier-Rohrleitung - insbesondere Kühl-Rohrleitung - vorzugsweise zur Temperierung bzw. Kühlung der Batteriesysteme von Kraftfahrzeugen eingesetzt.

Temperier-Rohrleitungen bzw. Kühl-Rohrleitungen sind aus der Praxis in unterschiedlichen Ausführungsformen bekannt und zwar insbesondere auch für die Temperierung bzw. Kühlung von Kraftfahrzeugkomponenten. Beispielhaft sei auf die US 2005/019517 A1 und auf die US 2008/187701 A1 verwiesen. Die bisher bekannten Rohrleitungen lassen aber oftmals im Hinblick auf ihre Barriereeigenschaften gegenüber dem Temperiermedium und/oder im Hinblick auf ihre thermische Isolierung zu wünschen übrig. Wenn derartige Rohrleitungen mit zufriedenstellenden Barriereeigenschaften und zusätzlich ausreichender thermischer Isolierung erzeugt werden, ist das in der Regel mit hohem Aufwand bzw. hohem Materialaufwand und damit hohen Kosten verbunden. Viele der aus der Praxis bekannten mehrschichtigen Temperier-Rohrleitungen sind fernerhin mechanisch nicht ausreichend resistent, obwohl eine mechanische Resistenz gerade in Rohrleitungen für Kraftfahrzeuge wichtig und wünschenswert ist.

Demgegenüber liegt der Erfindung das technische Problem zugrunde, eine Kraftfahrzeug-Temperier-Rohrleitung anzugeben, die im Hinblick auf ihre Barriereeigenschaften sowie in Bezug auf ihre thermische Isolierung und zusätzlich auch bezüglich ihrer mechanischen Eigenschaften allen Anforderungen genügt und nichtsdestoweniger mit geringem Aufwand und geringen Kosten herstellbar ist.

Zur Lösung dieses technischen Problems lehrt die Erfindung eine mehrschichtige Kraftfahrzeug-Temperier-Rohrleitung für fluide Temperiermedien - insbesondere für fluide Kühlmedien -- wobei die Rohrleitung zumindest drei Schichten aufweist und zwar mit folgendem Schichtenaufbau von außen nach innen:
- eine Außenschicht, wobei diese Außenschicht zu mindestens 98 Gew.-% aus HDPE oder aus einem thermoplastischen Vulkanisat (TPV) besteht,
- eine Zwischenschicht aus Polypropylen (PP),
- eine Innenschicht aus Polyethylen oder aus einem thermoplastischen Vulkanisat (TPV),
wobei die Gesamtschichtdicke der Rohrleitung 0,5 bis 3,0 mm, insbesondere 0,7 bis 2,5 mm, vorzugsweise 0,75 bis 2,2 mm, bevorzugt 0,8 bis 2 mm, sehr bevorzugt 0,85 bis 1,8 mm und besonders bevorzugt 0,85 bis 1,6 mm beträgt.

Diese Gesamtschichtdicke der Rohrleitung hat sich im Hinblick auf die Lösung des technischen Problems und insbesondere im Hinblick auf die Erzielung der verschiedenen Vorteile besonders bewährt.

Die Erfindung betrifft die Verwendung einer Kraftfahrzeug-Rohrleitung als Temperier-Rohrleitung - insbesondere als Kühlleitung - in Kraftfahrzeugen. Dabei wird ein fluides Temperiermedium - insbesondere ein fluides Kühlmedium - und bevorzugt ein flüssiges Temperiermedium - insbesondere ein flüssiges Kühlmedium - durch die Rohrleitung geführt. Die erfindungsgemäße Kraftfahrzeug-Temperier-Rohrleitung kann in Temperiersystemen von herkömmlichen Kraftfahrzeugen mit Verbrennungsmotor eingesetzt werden. Gemäß einer besonderen Ausführungsform der Erfindung wird die erfindungsgemäße Kraftfahrzeug-Temperier-Rohrleitung in Temperier-Systemen von Elektrofahrzeugen oder in Temperier-System von Hybrid-Kraftfahrzeugen mit Elektromotor und Verbrennungsmotor eingesetzt. - Nach einer empfohlenen Ausführungsform der Erfindung wird die erfindungsgemäße Kraftfahrzeug-Temperierrohrleitung in einem Temperier-System zur Temperierung bzw. zur Kühlung der Batterie eines Kraftfahrzeuges verwendet. Auch liegt es im Rahmen der Erfindung, dass die erfindungsgemäße Kraftfahrzeug-Temperier-Rohrleitung als Temperier-Rohrleitung bzw. Kühl-Rohrleitung in einer Klimaanlage eines Kraftfahrzeuges eingesetzt wird. Die Rohrleitung kann vor allem auch zur Kühlung von Kraftfahrzeug-Batterien in Elektro-Kraftfahrzeugen oder in Hybrid-Kraftfahrzeugen eingesetzt werden.

Gemäß besonders empfohlener Ausführungsform der Erfindung wird als Temperiermedium bzw. als Kühlmedium ein flüssiges Medium verwendet. Dabei kann es sich um ein Flüssigkeitsgemisch handeln und hier kann insbesondere ein Alkohol-Wasser-Gemisch, vorzugsweise ein Glykol-Wasser-Gemisch eingesetzt werden. Grundsätzlich sind aber auch andere Temperiermedien bzw. Kühlmedien im Rahmen der Erfindung möglich.

Erfindungsgemäß wird eine Außenschicht aus Polyethylen oder aus einem thermoplastischen Vulkanisat (TPV) eingesetzt. Es liegt dabei im Rahmen der Erfindung, dass die Außenschicht im Wesentlichen aus Polyethylen oder im Wesentlichen aus einem thermoplastischen Vulkanisat (TPV) besteht. Die Außenschicht kann neben dem genannten Kunststoff insbesondere Additive bzw. übliche Additive aufweisen. Erfindungsgemäß besteht die Außenschicht zu mindestens 98 Gew.-% aus Polyethylen oder aus einem thermoplastischen Vulkanisat (TPV).

Bei dem für die Außenschicht eingesetzten Polyethylen handelt es sich erfindungsgemäß um HDPE (HighDensityPolyethylene). Dem Einsatz von HDPE für die Außenschicht kommt im Rahmen der Erfindung ganz besondere Bedeutung zu. Dadurch werden beachtliche Vorteile im Hinblick auf die Lösung des technischen Problems erzielt. - Bei dem alternativ für die Außenschicht eingesetzten thermoplastischen Vulkanisat (TPV) handelt es sich in einer empfohlenen Ausführungsform um eine Mischung bzw. eine Legierung aus einem Elastomer und einem Polyolefin - insbesondere Polypropylen (PP). Bei dem Elastomer handelt es sich vorzugsweise um EPDM (Ethylen-Propylen-Dien-Kautschuk).

Zweckmäßigerweise beträgt die Dicke der Außenschicht 10 bis 50 %, vorzugsweise 10 bis 45 %, bevorzugt 10 bis 40 % und sehr bevorzugt 15 bis 40 % der Gesamtschichtdicke bzw. der Gesamtwanddicke der Rohrleitung. Grundsätzlich liegt es im Rahmen der Erfindung, dass die erfindungsgemäße Temperier-Rohrleitung außen angrenzend an die Außenschicht noch zumindest eine äußerste Schicht aufweist.

Erfindungsgemäß ist zwischen der Außenschicht und der Innenschicht eine Zwischenschicht aus Polypropylen (PP) vorgesehen. Es liegt dabei im Rahmen der Erfindung, dass die Zwischenschicht im Wesentlichen aus Polypropylen (PP) besteht. Die Zwischenschicht kann zusätzlich zu PP insbesondere auch Additive bzw. übliche Additive aufweisen. Empfohlenermaßen besteht die Zwischenschicht zu mindestens 90 Gew.-%, vorzugsweise zu mindestens 92 Gew.-%, bevorzugt zu mindestens 95 Gew.-% und sehr bevorzugt zu mindestens 98 Gew.-% aus Polypropylen (PP). - Zweckmäßigerweise beträgt die Dicke der Zwischenschicht 10 bis 45%, vorzugsweise 10 bis 40%, bevorzugt 15 bis 40 % und sehr bevorzugt 15 bis 35 % der Gesamtschichtdicke bzw. der Gesamtwanddicke der Rohrleitung.

Erfindungsgemäß weist die mehrschichtige Kraftfahrzeug-Temperier-Rohrleitung eine Innenschicht aus Polyethylen oder aus einem thermoplastischen Vulkanisat (TPV) auf. Es liegt dabei im Rahmen der Erfindung, dass die Innenschicht im Wesentlichen aus Polyethylen oder im Wesentlichen aus einem thermoplastischen Vulkanisat besteht. Die Innenschicht kann zusätzlich zu dem genannten Kunststoff insbesondere auch Additive bzw. übliche Additive aufweisen. Zweckmäßigerweise besteht die Innenschicht zu mindestens 90 Gew.-%, vorzugsweise zu mindestens 92 Gew.-%, bevorzugt zu mindestens 95 Gew.-% und sehr bevorzugt zu mindestens 98 Gew.-% aus Polyethylen oder aus einem thermoplastischen Vulkanisat (TPV). Vorzugsweise wird als Polyethylen HDPE für die Innenschicht eingesetzt. Polyethylen bzw. HDPE hat sich für die Innenschicht der erfindungsgemäßen Rohrleitung besonders bewährt und dadurch werden beachtliche Vorteile in Hinblick auf die Lösung des oben dargelegten technischen Problems erzielt. - Nach einer anderen empfohlenen Ausführungsform der Erfindung wird für die erfindungsgemäße Kraftfahrzeug-Temperier-Rohrleitung eine Innenschicht aus einem thermoplastischen Vulkanisat (TPV) eingesetzt. Vorzugsweise wird als thermoplastisches Vulkanisat der Innenschicht eine Mischung bzw. eine Legierung aus einem Elastomer und einem Polyolefin, insbesondere Polypropylen (PP) verwendet. Zweckmäßigerweise ist das Elastomer EPDM (Ethylen-Propylen-Dien-Kautschuk).

Eine empfohlene Ausführungsform der Erfindung ist dadurch gekennzeichnet, dass die Dicke der Innenschicht 10 bis 50 %, vorzugsweise 10 bis 45 %, bevorzugt 10 bis 40 % und besonders bevorzugt 15 bis 40 % der Gesamtwanddicke bzw. Gesamtschichtdicke der Rohrleitung beträgt. Nach einer Ausführungsvariante der Erfindung beträgt die Dicke der Innenschicht 10 bis 35%, insbesondere 10 bi 30% der Gesamtschichtdicke bzw. Gesamtwanddicke der Rohrleitung.

Es liegt im Rahmen der Erfindung, dass die erfindungsgemäße Rohrleitung das Schichtenaggregat "Außenschicht - Zwischenschicht - Innenschicht" aufweist und optional ansonsten lediglich zumindest eine - bevorzugt eine - an die Außenschicht angrenzende äußerste Schicht und/oder zumindest eine - insbesondere eine - an die Innenschicht angrenzende innerste Schicht. Eine Ausführungsform der Erfindung ist dadurch gekennzeichnet, dass die erfindungsgemäße Kraftfahrzeug-Temperier-Rohleitung lediglich das Schichtenaggregat "Außenschicht - Zwischenschicht - Innenschicht" aufweist, und zwar insbesondere ohne weitere zwischengeschaltete Schichten und ohne außen und/oder innen angrenzende Schichten.

Gemäß einer empfohlenen Ausführungsform der Erfindung ist zwischen der Außenschicht und der Zwischenschicht zumindest eine - vorzugsweise eine - erste Haftvermittlerschicht zwischengeschaltet. Zweckmäßigerweise beträgt die Dicke der ersten Haftvermittlerschicht 2 bis 25 %, vorzugsweise 3 bis 20 %, bevorzugt 5 bis 20 % und sehr bevorzugt 5 bis 15 % der Gesamtschichtdicke bzw. der Gesamtwanddicke der Rohrleitung. Eine Ausführungsform der Erfindung ist dadurch gekennzeichnet, dass die Dicke der ersten Haftvermittlerschicht 20 bis 70 %, bevorzugt 25 bis 70 % und besonders bevorzugt 25 bis 65 % der Dicke der Außenschicht beträgt.

Es liegt im Rahmen der Erfindung, dass zwischen der Zwischenschicht und der Innenschicht zumindest eine - vorzugsweise eine - zweite Haftvermittlerschicht zwischengeschaltet ist. Gemäß bevorzugter Ausführungsform der Erfindung beträgt die Dicke der zweiten Haftvermittlerschicht 2 bis 25 %, vorzugsweise 3 bis 20 % und bevorzugt 5 bis 15 % der Gesamtschichtdicke bzw. der Gesamtwanddicke der Rohrleitung. Eine Ausführungsvariante zeichnet sich dadurch aus, dass die Dicke der zweiten Haftvermittlerschicht 20 bis 60 %, vorzugsweise 20 bis 55 % und bevorzugt 25 bis 55 % der Dicke der Zwischenschicht beträgt. Nach bewährter Ausführungsform der Erfindung beträgt die Dicke der zweiten Haftvermittlerschicht 25 bis 70 %, bevorzugt 25 bis 65 % der Dicke der Außenschicht.

Eine sehr empfohlene Ausführungsform der Erfindung zeichnet sich dadurch aus, dass die erste Haftvermittlerschicht und/oder die zweite Haftvermittlerschicht eine Haftvermittlerschicht auf Basis zumindest eines Polyolefins, insbesondere auf Basis von Polyethylen - ist. Bewährtermaßen ist die erste Haftvermittlerschicht und/oder die zweite Haftvermittlerschicht eine Haftvermittlerschicht auf Basis eines mit zumindest einem Carbonsäurederivat - vorzugsweise mit Maleinsäurederivat - modifizierten Polyolefins - insbesondere modifizierten Polyethylens.

Es liegt im Rahmen der Erfindung, dass die Rohrleitung das Schichtenaggregat "Außenschicht - erste Haftvermittlerschicht - Zwischenschicht - zweite Haftvermittlerschicht - Innenschicht" ohne Zwischenschaltung weiterer Schichten aufweist und optional ansonsten lediglich zumindest eine an die Außenschicht angrenzende äußerste Schicht und/oder zumindest eine an die Innenschicht angrenzende innerste Schicht aufweist. Nach einer Ausführungsform der Erfindung besteht die erfindungsgemäße Rohrleitung lediglich aus dem Schichtenaggregat "Außenschicht - erste Haftvermittlerschicht - Zwischenschicht - zweite Haftvermittlerschicht - Innenschicht" und zwar ohne Zwischenschaltung weiterer Schichten und ohne weitere angrenzende äußerste und/oder innerste Schichten.

Gemäß bevorzugter Ausführungsform der Erfindung ist die Innenschicht dicker als die erste Haftvermittlerschicht und/oder dicker als die zweite Haftvermittlerschicht. Vorzugsweise ist die Innenschicht mindestens 1,2-mal, bevorzugt mindestens 1,5-mal und sehr bevorzugt mindestens 2-mal dicker als die erste Haftvermittlerschicht und/oder als die zweite Haftvermittlerschicht. - Weiterhin liegt es im Rahmen der Erfindung, dass die Zwischenschicht dicker ist als die erste Haftvermittlerschicht und/oder dicker ist als die zweite Haftvermittlerschicht. Zweckmäßigerweise ist die Zwischenschicht mindestens 1,2-mal, bevorzugt mindestens 1,5-mal und sehr bevorzugt mindestens 2-mal dicker als die erste Haftvermittlerschicht und/oder als die zweite Haftvermittlerschicht. - Vorzugsweise ist die Außenschicht dicker als die erste Haftvermittlerschicht und/oder dicker als die zweite Haftvermittlerschicht. Es liegt im Rahmen der Erfindung, dass die Außenschicht mindestens 1,2-mal, bevorzugt mindestens 1,5-mal und sehr bevorzugt mindestens 2-mal dicker ist als die erste Haftvermittlerschicht und/oder als die zweite Haftvermittlerschicht. - Nach einer Ausführungsvariante der Erfindung weisen die erste Haftvermittlerschicht und die zweite Haftvermittlerschicht die gleiche Dicke bzw. in etwa die gleiche Dicke auf. Vorzugsweise unterscheidet sich die Dicke der ersten Haftvermittlerschicht von der der Dicke der zweiten Haftvermittlerschicht maximal um 20 % oder vorzugsweise maximal um 15 % und bevorzugt maximal um 10 %.

Es liegt im Rahmen der Erfindung, dass die erfindungsgemäße Kraftfahrzeug-Temperier-Rohrleitung durch Extrusion bzw. Koextrusion der Schichten hergestellt wird. Dabei liegt der Erfindung die Erkenntnis zugrunde, dass die für die einzelnen Schichten eingesetzten Materialien und auch die bevorzugten Schichtdicken der einzelnen Schichten eine sehr einfache und energiesparende Koextrusion ermöglichen. Besonders vorteilhaft ist, dass die Extrusion der erfindungsgemäßen Rohrleitung bei moderaten Temperaturen durchgeführt werden kann.

Nachfolgend wird die Erfindung anhand eines Ausführungsbeispiels näher erläutert: Nach bevorzugter Ausführungsform weist die mehrschichtige Kraftfahrzeug-Temperier-Rohrleitung eine Außenschicht aus HDPE auf, eine Zwischenschicht aus Polypropylen und eine Innenschicht aus HDPE. Zwischen der Außenschicht und der Zwischenschicht sowie zwischen der Zwischenschicht und der Innenschicht ist vorzugsweise jeweils eine Haftvermittlerschicht zwischengeschaltet. Die Dicke der Außenschicht beträgt zweckmäßigerweise und in diesem Ausführungsbeispiel 15 bis 45 % der Gesamtschichtdicke bzw. Gesamtwanddicke der Rohrleitung und bevorzugt beträgt die Dicke der Zwischenschicht 10 bis 40% der Gesamtschichtdicke bzw. der Gesamtwanddicke der Rohrleitung. Fernerhin beträgt empfohlenermaßen und in diesem Ausführungsbeispiel die Dicke der Innenschicht 15 bis 45% der Gesamtschichtdicke bzw. Gesamtwanddicke der Rohrleitung. Die Dicke der ersten Haftvermittlerschicht und die Dicke der zweiten Haftvermittlerschicht betragen vorzugsweise und im Ausführungsbeispiel 2 bis 20 % der Gesamtschichtdicke bzw. Gesamtwanddicke der Rohrleitung. Dabei beträgt die Dicke der ersten Haftvermittlerschicht und der zweiten Haftvermittlerschicht zweckmäßigerweise 20 bis 65 % der Dicke der Außenschicht. Nach bevorzugter Ausführungsform der Erfindung und im Ausführungsbeispiel handelt es sich bei der ersten Haftvermittlerschicht und bei der zweiten Haftvermittlerschicht um eine Haftvermittlerschicht auf Basis eine Polyolefins, insbesondere auf Basis von Polyethylen.

Gemäß einer Ausführungsform der Erfindung schließt außen an die Außenschicht der Rohrleitung zumindest eine äußerste Schicht aus einem Polyolefin, insbesondere aus Polypropylen an. Eine besonders bevorzugte Ausführungsform ist dadurch gekennzeichnet, dass außen an die Außenschicht ein Schichtenaggregat mit Schichten aus Polyolefinen - vorzugsweise ausschließlich mit Schichten aus Polyolefinen - angrenzt. Dabei hat dieses Schichtenaggregat vorzugsweise eine alternierende Schichtenfolge mit alternierenden Schichten aus Polypropylen und HDPE. So weist dieses Schichtenaggregat beispielsweise die alternierende Schichtenfolge PP/HDPE/PP... auf.

Der Erfindung liegt die Erkenntnis zugrunde, dass sich die erfindungsgemäße mehrschichtige Kraftfahrzeug-Temperier-Rohrleitung durch ausgezeichnete Barriereeigenschaften gegenüber den Temperiermedien, insbesondere gegenüber Alkohol-Wasser-Gemischen und vor allem gegenüber Glykol-Wasser-Gemischen auszeichnet. Außerdem weist die erfindungsgemäße Temperier-Rohrleitung auch hervorragende thermische Isolationseigenschaften auf. Fernerhin genügen auch die mechanischen Eigenschaften bzw. genügt die mechanische Widerstandsfähigkeit allen Anforderungen. Die erfindungsgemäße Temperier-Rohrleitung weist mit ihrem Schichtenverbund vor allem eine optimale mechanische Festigkeit aus. Ein weiterer Vorteil der erfindungsgemäßen Temperier-Rohrleitung liegt darin, dass unerwünschte Kriecheigenschaften des HDPE im erfindungsgemäßen Schichtenverbund vermieden werden können. Es können überraschend dichte und feste Anschlüsse der erfindungsgemäßen Rohrleitung an Verbindern und anderen Komponenten realisiert werden. Dies lässt sich aufgrund des erfindungsgemäßen Schichtenverbundes erreichen. Hervorzuheben ist weiterhin, dass sich die erfindungsgemäße Temperier-Rohrleitung mit relativ einfachen und wenig aufwendigen Maßnahmen realisieren lässt. Die Koextrusion des Schichtenverbundes ist problemlos, effektiv und energiesparend möglich und der erfindungsgemäße Schichtenverbund zeichnet sich durch eine einfache und variable thermische und mechanische Verarbeitbarkeit aus. Bei der Herstellung der Rohrleitung ist im Vergleich zu den erzielten Vorteilen ein verhältnismäßig geringer Materialaufwand erforderlich. Damit liegen auch die Kosten für die Erzeugung der erfindungsgemäßen Temperier-Rohrleitung verhältnismäßig niedrig. Vor allem sind die erfindungsgemäßen Rohrleitungen kostengünstiger als vergleichbare Rohrleitungen mit Polyamid- bzw. Poylamid 12-Schichten.

Nachfolgend wird die Erfindung anhand einer lediglich ein Ausführungsbeispiel darstellenden Zeichnung näher erläutert. Es zeigen in schematischer Darstellung:

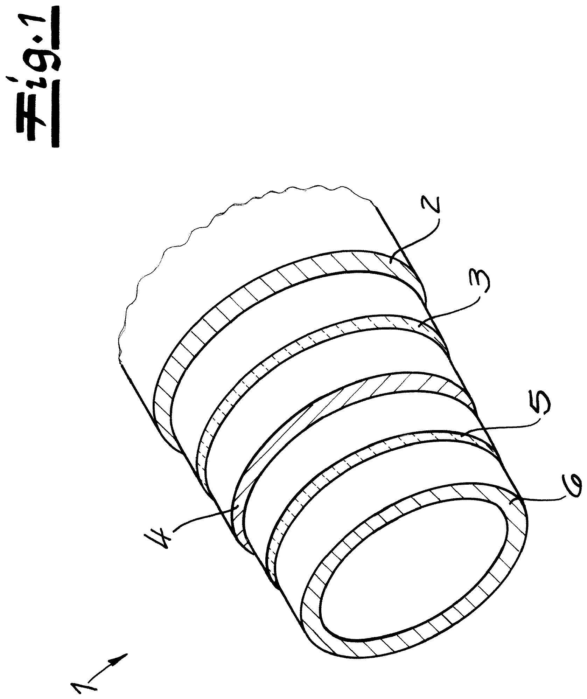

- Fig. 1: eine perspektivische Ansicht einer erfindungsgemäßen Kraftfahrzeug-Temperier-Rohrleitung und

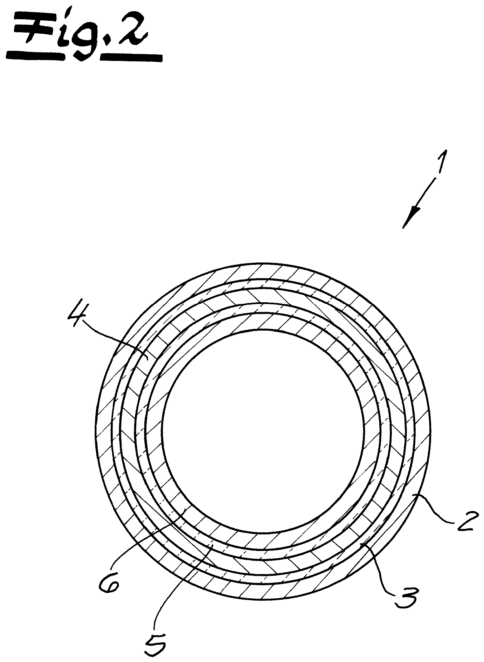

- Fig. 2: einen Schnitt durch den Gegenstand nach Fig. 1.

Die Figuren zeigen eine erfindungsgemäße Kraftfahrzeug-Temperier-Rohrleitung 1. Bei dieser Rohrleitung 1 mag es sich im Ausführungsbeispiel um eine Kühl-Rohrleitung 1 für Kraftfahrzeuge handeln. Das in den Figuren nicht dargestellte Kühlmedium wird durch die Rohrleitung 1 geleitet. Bei dem Kühlmedium handelt es sich vorzugsweise um ein Alkohol-Wasser-Gemisch und insbesondere um ein Glykol-Wasser-Gemisch. - Zweckmäßigerweise und im Ausführungsbeispiel weist die Rohrleitung 1 fünf Schichten auf. Dabei handelt es sich von außen nach innen um eine Außenschicht 2, eine erste Haftvermittlerschicht 3, eine Zwischenschicht 4, eine zweite Haftvermittlerschicht 5 und eine Innenschicht 6. Die Innenschicht 6 kann nach einer Ausführungsform Leitfähigkeitszusätze aufweisen, so dass sie elektrisch leitfähig ausgebildet ist.

Nach besonders bevorzugter Ausführungsform und im Ausführungsbeispiel wird eine Außenschicht 2 aus HDPE eingesetzt. Zweckmäßigerweise und im Ausführungsbeispiel ist die erste Haftvermittlerschicht 3 eine Haftvermittlerschicht auf Basis eines Polyolefins, insbesondere auf Basis von Polyethylen. Dabei handelt es sich vorzugsweise um ein modifiziertes Polyolefin und sehr bevorzugt um ein modifiziertes Polyethylen.

Erfindungsgemäß ist eine Zwischenschicht 4 aus Polypropylen (PP) vorhanden. Diese Zwischenschicht 4 besteht zweckmäßigerweise im Wesentlichen aus Polypropylen und kann zusätzlich Additive enthalten. Vorzugsweise und im Ausführungsbeispiel besteht die Zwischenschicht zu mindestens 95 Gew.-% aus Polypropylen. Fernerhin ist eine Innenschicht 6 aus Polyethylen und zwar bevorzugt aus HDPE vorgesehen. Empfohlenermaßen und im Ausführungsbeispiel ist die diese zweite Haftvermitterschicht 5 eine Haftvermittlerschicht auf Basis eines Polyolefins, insbesondere auf Basis von Polyethylen. Vorzugsweise handelt es sich dabei um ein modifiziertes Polyolefin, insbesondere um ein modifiziertes Polyethylen.

Die Gesamtschichtdicke bzw. die Gesamtwanddicke der Rohrleitung 1 beträgt zweckmäßigerweise 0,8 bis 2 mm und bevorzugt 0,9 bis 1,6 mm. Empfohlenermaßen und im Ausführungsbeispiel ist die Außenschicht 2 und die Zwischenschicht 4 und die Innenschicht 6 jeweils dicker als die erste Haftvermittlerschicht 3 und jeweils dicker als die zweite Haftvermittlerschicht 5. Zweckmäßigerweise ist die Außenschicht 2 und/oder die Zwischenschicht 4 und/oder die Innenschicht 6 mindestens 1,2-mal, bevorzugt mindestens 1,5-mal und sehr bevorzugt mindestens 1,8-mal dicker als die erste Haftvermittlerschicht 3 und/oder als die zweite Haftvermittlerschicht 5.

Gemäß einer weiteren Ausführungsform der Erfindung wird eine Außenschicht 2 und/oder eine Innenschicht 6 aus einem thermoplastischen Vulkanisat (TPV) eingesetzt. Bei dem thermoplastischen Vulkanisat handelt es sich bevorzugt um eine Legierung bzw. Mischung aus einem Elastomer und einem Polyolefin, vorzugsweise Polypropylen (PP). Dabei ist das Elastomer bevorzugt EPDM (Ethylen-Propylen-Dien-Kautschuk).

## Patentansprüche

1. Mehrschichtige Kraftfahrzeug-Rohrleitung (1), insbesondere eine Kraftfahrzeug-Temperier-Rohrleitung (1) für fluide Temperier- und Kühlmedien, wobei die Rohrleitung (1) zumindest drei Schichten (2, 4, 6) aufweist und zwar mit folgendem Schichtenaufbau von außen nach innen:
- eine Außenschicht (2), wobei diese Außenschicht (2) zu mindestens 98 Gew.-% aus HDPE oder aus einem thermoplastischen Vulkanisat (TPV) besteht,
- eine Zwischenschicht (4) aus Polypropylen (PP),
- eine Innenschicht (6) aus Polyethylen oder aus einem thermoplastischen Vulkanisat (TPV),
wobei die Gesamtschichtdicke bzw. die Gesamtwanddicke der Rohrleitung (1) 0,5 bis 3,0 mm, insbesondere 0,7 bis 2,5 mm, vorzugsweise 0,8 bis 2 mm und bevorzugt 0,85 bis 1,8 mm beträgt.

2. Rohrleitung nach Anspruch 1, wobei eine Innenschicht aus HDPE vorhanden ist.

3. Rohrleitung nach Anspruch 1, wobei das thermoplastische Vulkanisat (TPV) für die Außenschicht und/oder für die Innenschicht eine Mischung bzw. eine Legierung aus einem Elastomer und einem Polyolefin - insbesondere Polypropylen (PP) ist.

4. Rohrleitung nach Anspruch 3, wobei das Elastomer EPDM (Ethylen-Propylen-Dien-Kautschuk) ist.

5. Rohrleitung nach einem der Ansprüche 1 bis 4, wobei die Dicke der Außenschicht (2) 10 bis 50 %, vorzugsweise 10 bis 45 % und bevorzugt 15 bis 40 % der Gesamtwanddicke der Rohrleitung (1) beträgt.

6. Rohrleitung nach einem der Ansprüche 1 bis 5, wobei die Dicke der Zwischenschicht (4) 10 bis 45 %, vorzugsweise 15 bis 40 % der Gesamtwanddicke der Rohrleitung (1) beträgt.

7. Rohrleitung nach einem der Ansprüche 1 bis 6, wobei die Dicke der Innenschicht (6) 10 bis 50 %, vorzugsweise 10 bis 45 % und bevorzugt 15 bis 40 % der Gesamtwanddicke der Rohrleitung (1) beträgt.

8. Rohrleitung nach einem der Ansprüche 1 bis 7, wobei die Rohrleitung das Schichtenaggregat "Außenschicht - Zwischenschicht - Innenschicht" aufweist und optional ansonsten lediglich zumindest eine an die Außenschicht (2) angrenzende äußerste Schicht und/oder zumindest eine an die Innenschicht (6) angrenzende innerste Schicht.

9. Rohrleitung nach einem der Ansprüche 1 bis 7, wobei zwischen der Außenschicht (2) und der Zwischenschicht (4) zumindest eine - vorzugsweise eine erste Haftvermittlerschicht (3) zwischengeschaltet ist.

10. Rohrleitung nach Anspruch 9, wobei die Dicke der ersten Haftvermittlerschicht (3) 2 bis 25 %, vorzugsweise 5 bis 20 % der Gesamtwanddicke der Rohrleitung (1) beträgt.

11. Rohrleitung nach einem der Ansprüche 9 oder 10, wobei die Dicke der ersten Haftvermittlerschicht (3) 25 bis 70 % der Dicke der Außenschicht (2) beträgt.

12. Rohrleitung nach einem der Ansprüche 1 bis 7 oder 9 bis 11, wobei zwischen der Zwischenschicht (4) und der Innenschicht (6) zumindest eine - vorzugsweise eine - zweite Haftvermittlerschicht (5) zwischengeschaltet ist.

13. Rohrleitung nach Anspruch 12, wobei die Dicke der zweiten Haftvermittlerschicht (5) 2 bis 25 %, vorzugsweise 5 bis 20 % der Gesamtwanddicke der Rohrleitung (1) beträgt.

14. Rohrleitung nach einem der Ansprüche 12 oder 13, wobei die Dicke der zweiten Haftvermittlerschicht (5) 20 bis 60 %, bevorzugt 25 bis 55 % der Dicke der Zwischenschicht (4) beträgt.

15. Rohrleitung nach einem der Ansprüche 9 bis 14, wobei die erste Haftvermittlerschicht (3) und/oder die zweite Haftvermittlerschicht (5) eine Haftvermittlerschicht (3, 5) auf Basis eines Polyolefins - insbesondere auf Basis von Polyethylen - ist.

16. Rohrleitung nach Anspruch 15, wobei die erste Haftvermittlerschicht (3) und/oder die zweite Haftvermittlerschicht (5) eine Haftvermittlerschicht (3, 5) auf Basis eines mit zumindest einem Carbonsäurederivat - insbesondere Maleinsäurederivat - modifizierten Polyolefins - insbesondere modifizierten Polyethylens - ist.

17. Rohrleitung nach einem der Ansprüche 1 bis 7 oder 9 bis 16, wobei die Rohrleitung (1) das Schichtenaggregat "Außenschicht - erste Haftvermittlerschicht - Zwischenschicht - zweite Haftvermittlerschicht - Innenschicht" aufweist und optional ansonsten lediglich zumindest eine an die Außenschicht (2) angrenzende äußerste Schicht und/oder zumindest eine an die Innenschicht (6) angrenzende innerste Schicht aufweist.

18. Rohrleitung nach einem der Ansprüche 1 bis 17, wobei außenseitig an die Außenschicht zumindest eine weitere Schicht aus einem Polyolefin, insbesondere aus Polypropylen angrenzt.

19. Rohrleitung nach Anspruch 18, wobei außenseitig an die Außenschicht ein Schichtenaggregat von Schichten aus Polyolefin angrenzt, insbesondere ein Schichtenaggregat mit einer alternierenden Schichtenfolge von Polypropylen und HDPE.

## Claims

1. A multi-layered motor vehicle pipeline (1), in particular, a motor vehicle temperature-control pipeline (1) for fluid temperature-control and cooling media, wherein the pipeline (1) comprises at least three layers (2, 4, 6), particularly with the following layer structure from the outside to the inside:
- an outer layer (2), wherein this outer layer (2) consists of at least 98 % by weight of HDPE or of a thermoplastic vulcanisate (TPV),
- an intermediate layer (4) of polypropylene (PP),
- an inner layer (6) of polyethylene or of a thermoplastic vulcanisate (TPV),
wherein the total layer thickness or the total wall thickness of the pipeline (1) is 0.5 to 3.0 mm, in particular, 0.7 to 2.5 mm, preferably 0.8 to 2 mm and more preferably, 0.85 to 1.8 mm.

2. The pipeline according to Claim 1, wherein an inner layer of HDPE is present.

3. The pipeline according to Claim 1, wherein the thermoplastic vulcanisate (TPV) for the outer layer and/or for the inner layer is a mixture or an alloy composed of an elastomer and a polyolefin - in particular, polypropylene (PP).

4. The pipeline according to Claim 3, wherein the elastomer is EPDM (ethylene-propylene-diene monomer rubber).

5. The pipeline according to any one of Claims 1 to 4, wherein the thickness of the outer layer (2) is 10 to 50 %, preferably 10 to 45 % and, more preferably, 15 to 40 % of the total wall thickness of the pipeline (1).

6. The ppeline according to any one of Claims 1 to 5, wherein the thickness of the intermediate layer (4) is 10 to 45 %, preferably 15 to 40 % of the total wall thickness of the pipeline (1).

7. The pipeline according to any one of Claims 1 to 6, wherein the thickness of the inner layer (6) is 10 to 50 %, preferably 10 to 45 % and, more preferably, 15 to 40 % of the total wall thickness of the pipeline (1).

8. The pipeline according to one of Claims 1 to 7, wherein the pipeline comprises the layered aggregate "outer layer - intermediate layer - inner layer" and optionally, only comprises at least one outermost layer adjoining the outer layer (2) and/or at least one innermost layer adjoining the inner layer (6).

9. The pipeline according to any one of Claims 1 to 7, wherein at least one adhesion promoting layer (3), preferably a first one, is intermediately connected between the outer layer (2) and the intermediate layer (4) .

10. The pipeline according to Claim 9, wherein the thickness of the first adhesion promoter layer (3) is 2 to 25 %, preferably 5 to 20 % of the total wall thickness of the pipeline (1).

11. The pipeline according to any one of Claims 9 or 10, wherein the thickness of the first adhesion agent layer (3) is 25 to 70 % of the thickness of the outer layer (2) .

12. The pipeline according to any one of Claims 1 to 7 or 9 to 11, wherein at least one adhesion promoting layer (5), preferably a second one. is intermediately connected between the intermediate layer (4) and the inner layer (6).

13. The pipeline according to Claim 12, wherein the thickness of the second adhesion agent layer (5) is 2 to 25 %, preferably 5 to 20 % of the total wall thickness of the pipeline (1).

14. The pipeline according to any one of Claims 12 or 13, wherein the thickness of the second adhesion agent layer (5) is 20 to 60 %, preferably 25 to 55 %, of the thickness of the intermediate layer (4).

15. The pipeline according to any one of Claims 9 to 14, wherein the first adhesion promoting layer (3) and/or the second adhesion promoting layer (5) is a polyolefin-based adhesion promoting layer (3, 5), in particular, being polyethylene-based.

16. The pipeline according to Claim 15, wherein the first adhesion promoting layer (3) and/ or the second adhesion promoting layer (5) is an adhesion promoting layer (3, 5) that is polyolefin-based with the polyolefin having been modified using at least one carboxylic acid derivative - in particular, a maleic acid derivative - thereby, in particular being a modified polyethylene.

17. The pipeline according to any one of Claims 1 to 7 or 9 to 16, wherein the pipeline (1) comprises the layered aggregate "outer layer - first adhesion promoting layer - intermediate layer - second adhesion promoting layer - inner layer" and optionally, otherwise comprises only at least one outermost layer adjoining the outer layer (2) and/or at least one innermost layer adjoining the inner layer (6).

18. The pipeline according to any one of Claims 1 to 17, wherein at least one other layer made of polyolefin, in particular, made of polypropylene, adjoins the outer layer on the outside.

19. The pipeline according to Claim 18, wherein a layered aggregate composed of polyolefin layers adjoins the outer layer on the outside, in particular, a layered aggregate with an alternating sequence of polypropylene and HDPE layers.

## Revendications

1. Conduite multicouche pour véhicule automobile (1), en particulier une conduite de thermorégulation pour véhicule automobile (1) pour milieux thermorégulateurs et de refroidissement fluides, sachant que la conduite (1) comporte au moins trois couches (2, 4, 6) et à savoir avec la structure de couches suivante de l'extérieur vers l'intérieur :
- une couche extérieure (2), sachant que cette couche extérieure (2) est composée pour au moins 98 %/poids d'HDPE ou d'un vulcanisat thermoplastique (TPV),
- une couche intermédiaire (4) de polypropylène (PP),
- une couche intérieure (6) de polyéthylène ou d'un vulcanisat thermoplastique (TPV),
sachant que l'épaisseur totale de couche ou l'épaisseur totale de paroi de la conduite (1) est de 0,5 à 3,0 mm, en particulier de 0,7 à 2,5 mm, de préférence de 0,8 à 2 mm et de préférence surtout de 0,85 à 1,8 mm.

2. Conduite selon la revendication 1, sachant qu'une couche intérieure en HDPE est présente.

3. Conduite selon la revendication 1, sachant que le vulcanisat thermoplastique (TPV) pour la couche extérieure et/ou pour la couche intérieure est un mélange ou un alliage d'un élastomère et d'une polyoléfine, en particulier de polypropylène (PP).

4. Conduite selon la revendication, sachant que l'élastomère est un EPDM (caoutchouc éthylène-propylène-diène).

5. Conduite selon l'une quelconque des revendications 1 à 4, sachant que l'épaisseur de la couche extérieure (2) est de 10 à 50 % %, de préférence de 10 à 45 % et de préférence surtout de 15 à 40 % de l'épaisseur totale de paroi de la conduite (1).

6. Conduite selon l'une quelconque des revendications 1 à 5, sachant que l'épaisseur de la couche intermédiaire (4) est de 10 à 45 % %, de préférence de 15 à 40 % de l'épaisseur totale de paroi de la conduite (1).

7. Conduite selon l'une quelconque des revendications 1 à 6, sachant que l'épaisseur de la couche intérieure (6) est de 10 à 50 % %, de préférence de 10 à 45 % et de préférence surtout de 15 à 40 % de l'épaisseur totale de paroi de la conduite (1).

8. Conduite selon l'une quelconque des revendications 1 à 7, sachant que la conduite comporte un ensemble de couches « couche extérieure-couche intermédiaire-couche intérieure » et, autrement, en option uniquement au moins une couche extrême extérieure touchant la couche extérieure (2) et/ou au moins une couche extrême intérieure touchant la couche intérieure (6).

9. Conduite selon l'une quelconque des revendications 1 à 7, sachant qu'au moins de préférence une première couche d'agent adhésif (3) est intercalée entre la couche extérieure (2) et la couche intermédiaire (4).

10. Conduite selon la revendication 9, sachant que l'épaisseur de la première couche d'agent adhésif (3) représente 2 à 25 %, de préférence 5 à 20 % de l'épaisseur totale de paroi de la conduite (1).

11. Conduite selon l'une quelconque des revendications 9 ou 10, sachant que l'épaisseur de la première couche d'agent adhésif (3) représente de 25 à 70 % de l'épaisseur de la couche extérieure (2).

12. Conduite selon l'une quelconque des revendications 1 à 7 ou 9 à 11, sachant qu'au moins, de préférence, une deuxième couche d'agent adhésif (5) est intercalée entre la couche intermédiaire (4) et la couche intérieure (6).

13. Conduite selon la revendication 12, sachant que l'épaisseur de la deuxième couche d'agent adhésif (5) représente de 2 à 25 %, de préférence de 5 à 20 % de l'épaisseur totale de paroi de la conduite (1).

14. Conduite selon l'une quelconque des revendications 12 ou 13, sachant que l'épaisseur de la deuxième couche d'agent adhésif (5) représente de 20 à 60 %, de préférence de 25 à 55 % de l'épaisseur de la couche intermédiaire (4).

15. Conduite selon l'une quelconque des revendications 9 à 14, sachant que la première couche d'agent adhésif (3) et/ou la deuxième couche d'agent adhésif (5) est une couche d'agent adhésif (3, 5) à base d'une polyoléfine, en particulier à base de polyéthylène.

16. Conduite selon la revendication 15, sachant que la première couche d'agent adhésif (3) et/ou la deuxième couche d'agent adhésif (5) est une couche d'agent adhésif (3, 5) à base d'une polyoléfine modifiée avec au moins un dérivé d'acide carbonique, en particulier dérivé d'acide maléique, en particulier à base d'un polyéthylène modifié.

17. Conduite selon l'une quelconque des revendications 1 à 7 ou 9 à 16, sachant que la conduite (1) comporte l'ensemble de couches « couche extérieure- première couche d'agent adhésif - couche intermédiaire - deuxième couche d'agent adhésif - couche intérieur » et autrement, en option uniquement au moins une couche extrême extérieure touchant la couche extérieure (2) et/ou au moins une couche extrême intérieure touchant la couche intérieure (6).

18. Conduite selon l'une quelconque des revendications 1 à 17, sachant qu'au moins une autre couche en polyoléfine, en particulier en polypropylène vient toucher extérieurement la couche extérieure.

19. Conduite selon la revendication 18, sachant qu'un ensemble de couches en polyoléfine vient toucher extérieurement la couche extérieure, en particulier un ensemble de couches avec une succession de couches alternante de polypropylène et d'HDPE.
